# EUROPÄISCHE PATENTSCHRIFT

(11) **EP 3 477 820 B1**
(45) Veröffentlichungstag und Bekanntmachung des Hinweises auf die Patenterteilung: **24.02.2021**
(21) Anmeldenummer: 17020510.8
(22) Anmeldetag: 26.10.2017
(51) Int. Cl.: H02K 1/16, H02K 1/24, H02K 19/10, H02K 19/24, H02K 41/03

(54) **ELEKTRISCHE RINGMASCHINE FÜR DEN UMRICHTERBETRIEB**
ELECTRICAL RING MACHINE FOR INVERTER OPERATION
MACHINE ANNEAU ÉLECTRIQUE POUR FONCTIONNEMENT DE L'ONDULEUR

(43) Veröffentlichungstag der Anmeldung: 01.05.2019
(73) Patentinhaber: Reimers, Jan-Dirk, 52074 Aachen (DE)
(72) Erfinder: Reimers, Jan-Dirk, 52074 Aachen (DE)
(74) Vertreter: Michalski Hüttermann & Partner Patentanwälte mbB

(56) Entgegenhaltungen:
- DE-A1-102006 021 354
- GB-A- 2 518 688
- US-A- 3 597 646

## Beschreibung

### 1. Problembeschreibung und Stand der Technik

Die vorliegende Erfindung betrifft eine Anordnung einer elektrischen Arbeitsmaschine, die als segmentierte Ringmaschine ausgeführt und für den 4-Quadrantenbetrieb mit einem Umrichter vorgesehen ist.

Derartige Anordnungen sind im Stand der Technik der Elektromaschinen bereits in einigen typischen Ausführungen bekannt. Elektromaschinen dienen allgemein zum effizienten und ressourcenschonendem Aufbau von Antrieben. Für jeden Anwendungsbereich haben sich technische Lösungsprinzipien innerhalb der Bauformen der Elektromaschinen etabliert, die entweder branchenspezifisch gewachsen sind oder durch zwingende regulatorische Anforderungen oder auch wirtschaftliche Zwangsbedingungen geformt wurden. Diese Anwendungsanforderungen treffen im Rahmen der konstruktiven Gestaltung auf die Notwendigkeit der Baugruppenbildung, der Modulbauweise oder aber auf Plattformkonzepte, die die wirtschaftliche und damit industrielle Herstellung von Antriebskomponenten durch Komponentenhersteller erst ermöglicht. In diesem Anforderungsfeld bestehen nach wie vor Probleme innerhalb des technologischen Kompromisses der Schnittstellenwahl der Bauausführung.

So lässt sich ein Antriebstrang obwohl er immer aus den Komponenten Welle, Hauptlager, Kupplung, Getriebe, Drehmomentstütze/Fundament und Elektromaschine sowie Umrichter/Energieversorgung besteht mal mehr oder minder in die beiden möglichen Kategorien modularer Aufbau und hybrider Aufbau einteilen. Der modulare Aufbau zeichnet sich durch seine Flexibilität im Aufbau und durch seine Funktionsaufteilung in z.B. genormte Komponenten aus, was die Entwicklung dessen beschleunigt und vergünstigt. Der hybridisierte Aufbau zeichnet sich durch synergetische Doppelnutzung von gewissen Elementen aus, die Kosten in der späteren Bauausführung sparen, die sich aber nur bei größeren Stückzahlen lohnen, da der Entwicklungsaufwand bis hinunter in die Grund- komponenten geführt und aufgewendet werden muss. Die Verwendung der Komponente bleibt jedoch auf diese eine spezifische Applikation beschränkt. Bei diesem grundsätzlichen Problem ist es weitgehend unerheblich, ob sich der Antriebstrang mit oder ohne Getriebe in seine Applikation einpasst.

Die Direktantriebe (Torqueantriebe) ohne Getriebe spielen hier heute noch eine unterordnete und weniger verbreitete Rolle. Daher lassen sich auch weniger Standardantriebe bzw. sogenannte Katalogantriebe im Bereich der Direktantriebe finden.

Gemäß des physikalischen Zusammenhangs P=2*PI*n*M ergibt sich die Antriebsleistung aus Drehzahl x Drehmoment. Während sich die Drehzahl in der Bauform nur limitierend in Form der Grenzdrehzahl der Lagerung, der Eigenfrequenz der Welle und der Fliehkraftbelastung des rotierenden Aufbaus niederschlägt, was sich bauartbedingt recht einfach und kostengünstig lösen lässt, findet sich die Drehmomentanforderung recht direkt in der Luftspaltfläche, dem Luftspaltdurchmesser und der möglichen Luftspalttangentialkraft wieder. Diese technologischen Grenzen lassen sich ebenfalls lösen, führen aber direkt zu kostenintensiven Bauartänderungen, wenn ein Antrieb anstatt aus einer hohen Drehzahl seine Leistung aus einem hohen Moment heraus erzeugen soll.

Die erste Art der Modifikation wird der Durchmesser sein, diese Modifikation schlägt sich mit der zweiten Potenz im Gewicht nieder, was die Materialkosten in der gleichen Potenz erhöhen wird. Die zweite Art der Modifikation wird die Erhöhung der Luftspalttangentialkraft sein. Dieses ist mit einer zwingenden Erhöhung des Flusses verbunden, was zu hochausgenutzten Maschine führt, wie sie mittels permanenterregten Synchronmaschinen oder auch im Läufer mit supraleitenden Synchronmaschinen aufgebaut werden können. Weiterhin wird über Variationen der Flussführung bei Radialfluss, Axialfluss oder Transversalflussmaschinen versucht hier ein konstruktives Optimum der Kraftdichte und Ausnutzung zu erzeugen. Diese Maschinen benötigen in erheblichem Maße kostenintensive Werkstoffe und Fertigungstechnologien, so dass sie im Wettbewerb mit klassischen Getriebesystemen nicht kostengünstiger sind, im Gegenteil. Als einziger Vorteil kann eine ge- wisse Wartungsfreundlichkeit vermutet werden, was sich aber erst anhand der Schadensrate im späteren Betrieb beweisen muss.

Als weitere limitierende Größe für alle E-Maschinen wirkt die Physik der Wärmeabfuhr der Verlustleistung in den Wicklungen des Stators und des Läufers, den Blechen und/oder den Magneten des Läufers. So muss ein großer Teil des Wirkungsgradvorteils bei hochausgenutzten Maschinen durch eine zusätzliche Zwangskühlung zurückgekauft werden. Dies gilt insbesondere bei langsam laufenden Großmaschinen da hier die Eigenkühlung oberflächenspezifisch und aufgrund der geringen Wirkung der Wellenlüfter geringer ausfällt. Selbst bei einer Zwangskühlung mittels extern angetriebenem Kühlmedium, ein Problem bleibt immer die Entwärmung des Läufers, die bauartbedingt nur über ein gasförmiges Medium mit verminderter Wärmekapazität im Vergleich zu einer Flüssigkeitskühlung erfolgen kann. Die Wicklungen, deren Isolierung, der Läuferkäfig oder die Magneten sind daher in ihrer Ausnutzung im Mittel und in der Spitzenlast durch die Grenztemperatur limitiert. Dies kann bei kurzzeitiger Verwendung in Überlast bei z.B. zeitlich limitierbaren Startanläufen geduldet werden, nicht aber bei Dauerbetrieb, oder sicherheitsrelevanten Bremsvorgängen, bei der z.B. motorisch gebremst werden muss oder eine längere Haltezeit unter Last nötig werden kann.

Weiterhin wirkt bei Antrieben mit großen Luftspaltdurchmesser die oben angesprochenen Erwärmung derart zusätzlich limitierend, dass sich der Durchmesser des Läufers bedingt durch seinen Differenztemperatur zum Stator, wie er aufgrund der unterschiedlichen Kühlung weder im Anlauf der Maschine bis zum thermischen Gleichgewicht bezogen auf die Leistungsaufnahme, noch innerhalb des thermischen Gleichgewichts, zwischen Läufer und Stator vermieden werden kann, in einem differentiellen Durchmesserwachstum in Höhe der differentiellen Temperatur äußert. Die thermischen Durchmesseränderungen von Läufer und Stator addieren sich zu den Fertigungstoleranzen und betriebsbedingten Verformungen, die gerade bei großen Durchmessern auftreten, hinzu. Diese benötigen ein Aufmaß im Luftspalt für alle erdenklichen Extremwertzustände im Betrieb. Auch dies wirkt einer Maximierung der Tan- gentialkraftdichte entgegen, da hier der Luftspaltabstand direkt einen Einfluss hat. Die Möglichkeit der Kraftdichteerhöhung reduziert sich auf den Einsatz eines höheren Strombelages (Wärmeerzeugung) und/oder eines Einsatzes von teuren Magneten und Magnetfläche, was wiederum die Kosten erhöht.

Abhängig von der Auslegungsdrehzahl der Maschine muss die Polzahl des Antriebes angepasst werden, ein weiterer Konstruktionsparameter der in alle vorherigen Überlegungen hineinspielt. Gerade Drehmomentantriebe zeichnen sich durch höhere Polpaarzahlen aus.

In Summe werden in der Literatur eine Reihe von Vergleichskennzahlen vorgestellt, die die Optimierung der verschiedenen Antriebsmaschinen abhängig von der Bauform ermöglichen soll: Leistungsdichte, Kraftdichte, Wirkungsgrad, Essonsche Leistungsziffer, Drehschub, Strombelag, spezifische Feldstärken. Demgegenüber stehen alle erdenklichen Bauformen von E-Maschinen als asynchron, synchron, elektrisch erregte oder PMerregte Maschine, Reluktanzmaschine in geschalteter oder synchroner Ausführung in Radialfluss-Ausführung, Transversalfluss-, oder Axialfluss-Ausführung, einphasig, mehrphasig und in diversen Polpaarzahlen, Innenläufer oder Außenläufer, die umgesetzt wurden, um nach den oben erwähnten Grundzusammenhängen ein konstruktives Optimum darstellen zu können. Allen Maschinen ist dennoch gemeinsam, dass sie entweder dem modularen Komponentenbau (in Standardachshöhe) oder dem einzelapplikationsspezifischen Sondermaschinenbau angehören und damit einer hybriden Lösung entsprechen. Nach wie vor unterliegen sie als Torquemaschine einem Gewichts- oder Kostennachteil gegenüber getriebebehafteten Antriebsmaschine.

Eine Antriebsmaschine muss in die Applikation derart integriert werden, dass sie effizient arbeitet aber auch kostengünstig in der Fertigung ist, dies gilt für alle Antriebskomponenten. Es sind in Einzelanwendungen folgende vorteilhafte Sonderbauformen in Form einer Ringmaschine entwickelt worden: In der Offenlegungsschrift DE 101 31 113 A1 wird von Hoppe, Matscheko, Wollenberg ein Segmentmotor beschrieben der bei einem klassischen Läufer eines Asynchron-, Synchron- oder Torqumotors im äußeren Statorteil aus mehreren baugleichen Statorsegmenten besteht, auch der Rotor kann segmentiert vorliegen. Hierdurch soll die Fertigung, die Montage, der Transport sowie die Reparatur von Großantrieben vereinfacht werden. Die Segmente sind alle baugleich, eine Leistungsanpassung erfolgt über ein Weglassen oder Summieren der Statormodule. Nicht berücksichtigt wird hier der asymmetrische Zug auf einen Rotor bei segmentierter oder gelückter Aufstellung der Statorblöcke, insbesondere bei rein radialer Bauform der Maschine. Die reduzierte Ausnutzung der Umfangsfläche spart zwar Statorkosten und ermöglicht die Ausführung von z.B. Stützsäulen im Statorbereich, impliziert jedoch eine Überdimensionierung des Läufers was zu erheblichen Kostennachteilen führt. Für die Kühlung und wärmebedingte Luftspaltausdehnung wird keine Empfehlung gemacht, ebenso wenig wird ein Baukastenprinzip über mehrere Größen vorgeschlagen, ein Systemprüfkonzept dessen oder eine Notlaufeigenschaft dargestellt.

In DE 10 2007 002 782 A1 erweitern die Erfinder ihre Grundidee durch die vorteilhafte Verwendung von Linearmaschinenstatorblöcken, welche in gewinkelt angeordneter Form an die rotatorische Ausrichtung des Läufers angepasst werden und welche nun in Form einer Axialflussmaschine oder Radialflussmaschine Verwendung finden. Die Elemente sind vollständig segmentiert und werden als Baukasten über verschiedene Leistungsklassen angeboten. Die Segmente sollen über Einzelumrichter angesteuert werden. Der Läufer kann frei von Permanentmagneten gehalten werden, damit er nicht überdimensioniert wird. Zum Ausgleich der Radialzugkräfte kann eine biradiale oder biaxiale Anordnung der Statorblöcke erfolgen. Die Verwendung bezieht sich auf Asynchron- oder Synchronmaschinen für Stell-, Drehantriebe und Presswerke in rein motorischer Anwendung. Ein Kühlkonzept oder Prüfkonzept wird nicht vorgestellt, ebenso kein Konzept zum Ausgleich von thermischen Ausdehnungen.

In DE 10 2006 013 590 wird der Ansatz auf eine generatorische Ausführung für eine Großscheibenmaschine (Windkraft) übertragen und kombiniert die Elemente eines segmentierten Linearzahnspulenstators mit einem geblechten Läufer. Die Maschine kann als Synchronmaschine betrieben werden und ist mit unterteilten Umrichtern für jedes Segment in Form eines stapelfähigen Systems aufgebaut, über die Wärmeabführung, die Baugruppenbildung oder die geometrische Ausbildung des Systems wird keine Offenlegung getätigt.

In DE 10 2005 060180 wird eine Direktantriebs-Konfiguration für Windkraftanlagen basierend auf doppelseitigen elektrischen Radialfluss-Synchronmaschinen beschrieben, die als Permanentmagnet-(PM)-Maschinen, und alternativ auch als andere elektrische Maschinen, wie z. B. Wickelfeld-Synchronmaschinen oder Schalt-Reluktanzmaschinen ausgeführt werden kann. Der Generator enthält einen Rotor mit einem inneren Rotorabschnitt und einem äußeren Rotorabschnitt und einem doppelseitigen jochlosen Stator. Der jochlose Stator enthält mehrere modulare Blechstapel und ist für einen radialen Magnetfluss ausgelegt. Der jochlose Stator enthält auch mehrteilige Endringe, welche im Wesentlichen den doppelseitigen jochlosen Stator zur Steigerung der mechanischen Steifigkeit umgeben. Die modularen Blechstapel sind als unterschiedliche Kernpakete angeordnet, wobei jedes Kernpaket einen oder mehrere modulare Blechstapel aufweist. Die verwendeten Zahnspulen können unabhängig zum Maschinendurchmesser ausgelegt werden, wobei keine Aussage zur Art und Weise gemacht wird. Ein Kühlkonzept wird vorgestellt, die Einstellbarkeit der Einzelpole wird hervorgehoben, eine Aussage zum Wärmegangsmanagement wird nicht getätigt. In US 2006/0071575 und EP 1 641 101 wird der Ansatz durch einen doppeltwirkenden Stator mit zwei Wicklungsseiten der Zahnspulen und einer dazwischenliegenden Kühlebene für den Stator erweitert und dadurch eine verbesserte Kühlung offenbart. Eine besondere Bauform dessen wird in EP 2 066 005 in Form einer einseitigen Befestigung der aussenmantelgekühlten Zahnspulen am Statorrahmen beschrieben, ein Ausgleich zum Wärmegang wird nicht vorgestellt.

In DE 10 2010 010 127 wird eine weitere doppelwirkende Radialflussmaschine auf Basis einer PM-Synchronmaschine vorgestellt. Die Maschine nutzt Zahnspulenwicklung zeigt aber kein Konzept zur Baugruppenlösung oder zu einem Kühlkonzept des Läufers.

In WO2013/120230 wird ein ähnliches System für Reluktanzmaschinen beschrieben, welches sich durch seine doppeltwirkende, Radialflussstruktur als sehr kompakt auszeichnen soll. Ein modularer Baukastenansatz oder ein Kühlkonzept, sowie eine Lösung zum Wärmegang bei der radialen Luftspaltausrichtung sind nicht erkennbar.

Eine weitere Reluktanzmaschine wird in EP 199496 beschrieben, die als Scheibenläufer mit doppeltwirkenden Luftspalt in Axialbauweise aufgebaut ist. Sie verfügt über Einzelspulen, die über die Umfangsfläche verteilt angeordnet sind. Zur einfacheren Erregung können, wie in vielen Lösungen bekannt, Permanentmagnete in den Flusskreis eingebaut werden, die dann mittels der Elektrospulen in ihrer Flusswirkung gesteuert werden können, so auch in WO2008/119055 und US 6342746.

In EP 2 299 563 und EP 2 299 566 werden eine im Stator segmentierte Radialflussmaschine mit Zahnspulen beschrieben, der radiale Magnetfluss bildet innerhalb des Stators ein Ringschluss, durchtritt zweimal den Luftspalt und erzeugt innerhalb eines Statorsegmentes und dessen dazugehörigen Umrichter eigenständigen Strom unabhängig von weiteren Statorsegmenten. Trotzdem es eine PM-Maschien ist, werden die flussbildenden Teile in den Stator positioniert und der Läufer enthält zur besseren Ausnutzung nur Elektrobleche. Der Stator soll Baugruppen mit Gleichteilen bilden und jeweils eigene Kühl- und Umrichterkomponenten enthalten, Die Spulen können geeignet verschaltete werden und können ein Mehrphasensystem bilden. Die Zahnstruktur des Läufers soll durch seine luftführende Wirkung Kühlung für die Statorelemente erzeugen. Ein baugrößenspezifisches Baukastensystem wird nicht vorgeschlagen, der Wärmegang im Läufer wird nicht berücksichtigt und ein Kraftausgleich zur Kompensation der Polzüge wird nicht offenbart.

In DE 10 2207 050 496 wird in Form einer Synchronmaschine eine doppelwirkende, mehrfach gestapelte Radialflussmaschine vorgestellt, die durch ihre Stapelung eine Durchmesserverringerung bewirken soll. Ein Kühlkonzept wird angesprochen aber nicht eindeutig offenbart. Ein auf die Polgeometrie bezogenes spezifisches modulares Konzept ist nicht erkennbar.

In KR969682B1 wird ein bis zu vierseitig wirkender luftspaltgeregelter Ringenerator beschrieben, der sich zusätzlich zur elektrischen Antriebserzeugung durch eine Luftspaltlageregelung auszeichnet. Auch hier sol- len die Statorsegmente als modulare Gleichteile verteilt auf einem Statorringelement vorliegen, der Läufer wird als segmentierter Ring gefertigt. Zur Kühlung des Aufbaus oder zur Lösung des Wärmegangproblems wird keine Aussage gemacht.

Ein Ringgenerator für Windkraftanlagen mit berührender Luftspaltführung wird in US2011/014451 und US2013/0200630 offenbart, der mittels Reibrädern die mindestens zwei Statorsegmente in axialer Orientierung einseitig oder zweiseitig wirkend über den Läufer führt. Die axiale Luftspaltführung dient zur Kompensation der thermischen Ausdehnung und der Fertigungstoleranzen.

Ein Ringenerator mit Speichenstruktur wird in WO2/099950 beschrieben, der in radialer Bauform als Synchronmaschine auch Eisenlos mittels Luftspulen betrieben werden soll. Ein Modulkonzept oder Kühlkonzept, ein Umgang mit dem Wärmegang wird nicht offenbart.

Eine ähnliche Lösung eines Synchron-Ringgenerators, allerdings mit einem segmentierten Statorbereich beschreibt US6064123, auch hier wird keine Aussage zur Modulbauweise, zum Wärmegang oder zur Kühlung gemacht.

Ein doppeltwirkender PM-Axialfluss-Synchrongenerator wird in WO01/06623 beschrieben, der in symmetrisch aufgebauter Form als dreiphasige Maschine inkl. Kühlkonzept vorgeschlagen wird. Der Generator soll und muss zur Stabilität und Lenkung des Flusses durch die Einzelzahnpole vollständig in Kunststoff oder Klebstoff vergossen sein.

Weiterhin sind diverse Prinzipien und Umsetzungslösungen für Magnetlagerungen von Antrieben bekannt:
In EP 2 161 821 wird ein koaxial wirkender Generator beschrieben, der mittels zusätzlicher Regelung der Stator-Spulenpaare die mittleren Läufer lageregeln kann. Aus Platzgründen ist der innere Stator mit weniger Polen ausgestattet als der äußere Statorring, wobei der Polzahlunterschied über den Läuferring zu einer höheren Polwechselfrequenz moduliert wird und dadurch einer Übersetzung gleichkommen soll. Ein Kühlkonzept oder Modulkonzept wird nicht vorgestellt.

Ein weiterer Ringgenerator mit Luftspaltregelung wird in US 2011/0031760 vorgestellt, der mittels supraleitender Spulen komplett über eine Luftspaltregelung geführt und dann ohne mechanische Lagerungen betrieben werden soll.

**Im Ergebnis ist festzuhalten,** dass bereits unterschiedliche Ringmaschinen und Bauformkonzepte für Elektromaschinen bekannt sind. Dennoch ist es wünschenswert, diese konstruktiv zu verbessern und im Sinne eines Baukastenkonzepts zu erweitert, damit sie kostengünstiger und leistungsfähiger werden und dadurch erstmalig einer industriellen Verwendung zugeführt werden können.

Das Problem der eingangs beschriebenen Elektromaschinen und auch der Ausführung als doppelseitig wirkende Ringmaschinen (auch Generatoren) ist es, dass die Leistungsdichte zusammen mit dem Wirkungsgrad über die nötige spezifische Wärmeabfuhr bestimmt. Ist die Wärmeentwicklung zu hoch, kann die Maschine als Antrieb oder Generator nicht in der Leistungsdichte betrieben werden, die ihn aufgrund des dann vorliegenden Leistungsgewichts kostengünstig machen würde. Die Maschine muss in seiner Luftspaltfläche vergrößert werden und ist dann deutlich zu schwer und damit teurer als eine klassische Lösung. Die Doppelscheibenwirkung (Innen- und Aussenstator) ergibt dann keinen Vorteil, selbst bei einem Lastausgleich.

Das Problem innerhalb der Umsetzbarkeit steht und fällt mit der Möglichkeit den Läufer in erheblichem Maße **thermisch auszulasten und gleichzeitig die Luftspaltkonstanz** zu wahren, insbesondere bei einem im Vergleich zum üblichen Maß vergrößerten Luftspaltdurchmesser, wie er bei Ausführungen als Scheibenmaschine mit hohem Moment vorliegen würde.

Bei einer Temperaturdifferenz von 60°C zwischen Läufer und Stator verfügt eine Ringmaschine von 1,2 m Durchmesser über einen Wärmegang von 0,8 Millimeter auf den Durchmesser, bei 2 m sind es entsprechend 1,3 Millimeter. **Dieser Wärmegang muss unabhängig von der Maschinenart bei Radialflussmaschinen additiv zu den Fertigungstoleranzen und verformungsbedingten** Rundlauftoleranzen **berücksichtigt werden, wenn der Luftspalt der Maschine festgelegt werden muss.**

Diese technischen Probleme werden in keiner vorliegenden Anmeldung gelöst. Eine Umsetzung ist nicht bekannt.

In allen bekannten Konzepten findet sich ebenfalls **kein modularer Aufbau der Maschine und des Umrichters wieder,** der z.B. eine industrielle **Serienfertigung über verschiedene Maschinengrößen hinweg berücksichtigt.** Die **Elektromaschinen müssen üblicherweise für jede Leistungsklasse oder Drehmomentklasse und deren Nenndrehzahl neu ausgelegt** werden, dadurch werden Serieneffekte verschenkt. Ausgehend von diesem Stand der Technik ist es eine **Aufgabe** der vorliegenden Erfindung, eine alternative Anordnung der eingangs genannten Art zu schaffen.

GB 2 518 688 benennt eine elektrische Ringmaschine in Ausführung einer geschalteten Reluktanzmaschine, die mit segmentierten Statormodulen mit mindestens einem Statorblock betrieben werden kann. Hierbei umgibt der Statorblock den Ringläufer nur partiell zum Umfang und kann nach Anforderungen des Bauraums orientiert und skaliert werden. Die Statorsegmente können in den Winkeln 60°, 90°, 120°, 180° oder 240° ausgeführt sein Die Wicklungen sind als Zahnspulen ausgeführt und der Läufer besteht aus einer scheibenförmigen oder trommelförmigen Elektroblechstruktur.

US 3 597 646 benennt einen Läuferring in scheibenförmiger oder trommelförmiger Ausführung bestehend aus einer Tragstruktur und geblechten Ringsegmenten zur Flussführung. Die Rotorblechstruktur ist in Umfangslänge in Segmente aufgeteilt und dadurch bilden sich Ausnehmungen zwischen den Blechsegmenten, die der Flussführung der Synchronreluktanzmaschine dienen, sobald der Anlaufkäfig die Maschine am Netz hochgeschleppt hat.

DE 10 2006 021354 schlägt einen modularen maschinenseitigen Umrichteraufbau mit einer mindestens vierpoligen Maschine mit vier unabhängigen maschinenseitigen Umrichterkreisen mit jeweils 3 Phasen vor. Die vier Umrichter werden zueinander phasenstarr synchronisiert betrieben. Die mindestens vier Wicklungssysteme stellen damit eine redundante Maschine gleicher Polzahl dar.

### 2. Erfindungsgemäße Lösung

Es besteht für die Anordnung die **Aufgabe** einen modularen, segmentierten, mehrpoligen Sonderantrieb für hohe Momente und geringe Drehzahlen zu ermöglichen, wie er erfindungsgemäß ausgeführt eine Reihe von Vorteilen bietet. Ein "stapelfähiges" oder skalierbares Modul in Form von Elektromaschinen- und Umrichterelementen, welches für eine Baureihe und Varianten dessen von 0,05 bis zu mehreren hundert kW, bevorzugt aber für 0,1 bis 10 kW und / oder von 5 kW bis 500 kW eingesetzt werden kann, entspräche diesem Ansatz und wird hierfür im Folgenden näher vorgestellt.

Die Lösung der Aufgabe erfolgt erfindungsgemäß durch die Merkmale des unabhängigen Anspruchs 1. Bevorzugte Ausgestaltungen der Erfindung sind in den Unteransprüchen angegeben, die jeweils einzeln oder in Kombination einen Aspekt der Erfindung darstellen können.

Zur **Lösung dieser Aufgabe** schafft die vorliegende Erfindung eine Anordnung der eingangs genannten Art, die dadurch gekennzeichnet ist, dass sie in ihrer Baugruppeneinteilung und Funktion in hohem Maße applikationsspezifisch ausführbar beziehungsweise wandelbar ist, ohne in ihren Elementen die Standardbaugruppen bei einer Leistungsskalierung zu verändern, weiterhin ist sie thermisch erheblich besser ausnutzbar und derart modular, das sie selbst bei mehrfachem Komponentenausfall ausfallsicher ist und damit als Notlaufsicher eingestuft werden kann. Trotz Modulbauweise können applikationsspezifisch abgestimmte Antriebe aufgebaut werden, die dadurch erfindungsgemäß die thermische Grenzleistung, das Gewicht, den Entwicklungs- und Prüfaufwand und die Komponentenkosten im Vergleich erheblich reduzieren.

Ein Verfahren zum Betrieb und zur Prüfung wird ebenfalls vorgestellt.

Die grundsätzliche Nutzung von Ringmaschinen in ihren diversen Ausführungen ist, wie eingangs beschrieben, nicht neu, hier jedoch werden folgende **erfindungsgemäße Elemente** ergänzt:

### Nutzung des Reluktanzprinzips

Erfindungsgemäß wird eine doppelwirkende Radial- oder auch Axialflussmaschine, basierend auf einer geschalteten Reluktanzmaschine oder basierend auf einer Synchronreluktanzmaschine mit oder ohne Permanentmagnetunterstützung der Flussbildung, als Ringmaschine ausgebildet, wobei der **Stator nur partiell** den Umfang des Läufers abdeckt und zumindest aus einem Segmentblock gebildet wird. Es kann auch eine Kombination aus Radial- und Axialflussmaschine, bzw. Transversalflussmaschine Verwendung finden.

Der als **Ringelement ausgeführte, geblechte Läufer ist ebenfalls aus einer segmentierten Struktur zusammengesetzt** und ist auf einen scheibenförmigen oder trommelförmigen Träger appliziert oder in diesen integriert.

### Bauform einer teilüberdeckten Ringmaschine

Die erfindungsgemäße Ringmaschine zeichnet sich in Kombination der Segmentierung der Statorblöcke und Vergrößerung der Umfangslänge des Rotors und dadurch im Betrieb temporär nicht aktiv genutzte Bereiche des Rotors und der Ausführung als Reluktanzmaschine dadurch aus, dass diese Kombination derart positiv wirkt, das es betriebs- und bauartbedingt zu einer ungleichen Ausnutzung der Maschine zwischen dem Läuferring und den Statorsegmenten kommt.

Der Stator wird im Vergleich zum Rotor/Läufer spezifisch mit einer höheren Leistung ausgenutzt. Der Stator kann derart betrieben werden, dass er eine Kühlung benötigt. Der Läufer hingegen wird nur in den Segmentbereichen in den er vom Stator überdeckt ist aktiv betrieben und dadurch spezifisch geringer ausgenutzt. Er verfügt über eine Passivkühlung bedingt durch die Eigengeschwindigkeit innerhalb der Umgebungsluft in den nun nicht überdeckten Umfangsbereichen.

### Kühlluftführung in den Luftspalt

Weiterhin kann der Läufer Umgebungsluft seitlich ansaugen und durch den Statorbereich fördern und die Maschine damit innerhalb des Luftspaltes zwangskühlen. Hierzu ist eine geeignete Luftführung auch durch die Läuferstruktur sinnvoll, aber nicht zwingend notwendig. Der Stator kann technologisch gut beherrschbar z.B. mit einer Wasserkühlung versehen werden, der drehenden Läufer aber nicht ohne z.B. eine Drehdurchführung. In der Ausführung als Reluktanzmaschine fallen keine Kupferverluste im Läufer an und der Ringläufer wird durch weniger Verlustwärme erwärmt, kann allerdings bauartbedingt thermisch höher ausgenutzt werden, da die Werkstoffe dies zulassen würden. Sollte dieser Betrieb thermisch zu einer differentiellen Erwärmung des Läufers führen, was wie beschrieben zu einer unterschiedlichen thermischen Dehnung der Baugruppen führen könnte, so kommen nun die Elemente der vergrößerten Passivkühlung gerade aufgrund der erheblich vergrößerten Abstrahlfläche und Kühlfläche des Läufers in den nicht umschlossenen Bereichen erfindungsgemäß zum Tragen.

**Verminderung der Wärmedehung durch Segmentierung und Dehnfugen** Ebenfalls erfindungsgemäß ist der Läufer in Form der Läuferbleche, d.h. in Form der Ringsegmente segmentiert, damit die tangentiale Wärmeausdehung des Läuferrings durch die Segmentspalte, d.h. Ausnehmungen oder Fugen zwischen den Ringsegmenten unterbrochen ist und durch die getrennt vorliegende Läufertragstruktur maßlich stabil gehalten wird.

Die Ringmaschine besteht damit aus einem Läufertragring und Läufersegmenten, d.h. Ringsegmenten, die mehr oder minder segmentiert sein können und aus mindestens einem, bevorzugt 2, 3 oder 4 Statorelementen die symmetrisch oder unsymmetrisch auf den Umfang verteilt sind. Diese können mit einem Joch beidseitig wirkend oder jochlos mittels zweier nun beidseitig wirkender Spulenpakete angeordnet sein. Der Läufer wird nicht vollflächig umfasst, sondern ist bis auf den Erstre- ckungsbereich der Statorelemente frei zugänglich.

### Segmentierung des Stators, vergrößerter Durchmesser

Der Stator ist segmentiert und verfügt bei gleicher Statorfläche im Vergleich zu einer Standardmaschine mit vergleichbarer Leistung über einen erfindungsgemäß größeren Durchmesser des Luftspaltes. Dadurch wird der Stator mit einer deutlich höheren Umfangsgeschwindigkeit des Läufers und damit mit einer höheren Polwechselfrequenz betrieben. Dieser im Vergleich vergrößerte Radius führt gemäß der Formeln M=FxL [Nm] und P= 2*PI*n*M [Watt) zu einer besseren Nutzung der Luftspalttangentialkraft zur Drehmomentbildung. Die durch die Segmentierung vergrößerten Statorabstände zur wirksamen Drehachse entsprechen mit ihrer Hebellänge damit gleichsam einer Getriebeübersetzung, die hier allerdings nicht als Getriebe, sondern als Festübersetzung im Sinne eines Hebels wirkt. Dies erfolgt auf Kosten der Drehzahl.

Durch die beschriebene Bauform erhält der Statorblock bei identischer Essonscher-Leistungsziffer, wie heute üblich, ein angemessenes bzw. kostengünstiges Verhältnis aus Breite zu Höhe, was dem B zu D Verhältnis bzw. der Bohrung bei klassischen Maschinen entspricht und trotz des vergrößerten Ringgenerators zu einer ausgewogeneren Auslegung der Wicklungselemente und Pole führt.

Durch die Teilung in Statorsegmente und deren Einbau mit Abstand wird überdies eine zusätzliche Entkopplung der Polanzahl und Polbreite in Bezug zum Luftspaltdurchmesser möglich. Unter Verwendung der Hebelarmlänge (Durchmesser) als konstruktive Größe ist es erfindungsgemäß erheblich einfacher möglich eine Drehmomentmaschine zu gestalten, da die gewählte Polanzahl nur über ein Segment angesetzt werden braucht und nicht geschlossen auf den Umfang ausgelegt werden muss. Hierdurch sind mehr Varianten möglich. Die Reluktanzpole am Läuferring müssen weiterhin in Bezug zu den Statorpolen nicht im Sinne einer doppelten Polrichtung orientiert werden. Dadurch bieten sich mehr Freiheitsgrade zur Ableitung eines Baukastenprinzips, welches in seiner Umsetzung dann einfa- eher einer Drehmomentabstufung entsprechen kann. Insbesondere kann bei schon vorhandenen Statorstrukturen insbesondere bei festen Polweiten im Rahmen eines Baukastenprinzips eine bessere Anpassung an limitierenden Bauraumabmaße erfolgen, als es eine klassische Ringmaschine nach Stand der Technik ermöglichen würde.

### Beidseitig wirkender Rotor (Innen- und Aussenstator)

Der Luftspalt kann bei einer Bauform als beidseitig wirkende Maschine mit im Vergleich erheblich vergrößerten Luftspaltdurchmessers stabilisiert werden. Dies erfolgt nicht, wie üblich, durch eine Verstärkung der Tragstruktur, was zu erheblicher Gewichtszunahme führt, sondern erfindungsgemäß durch eine zusätzliche Klappung der Statorfläche nach innen zum Kraftausgleich der radialen Zugkräfte, die ca. ein fünf- bis zehnfaches der Tangentialkräfte der E-Maschine betragen. Der Stator umschließt dann den Läufer sowohl innen, wie außen. Dies führt zu einer weitgehend neutralen Radialkraft auf den Läufer, wenn die Flächen gemäß ihrer Ausdehnung oder Ausnutzung aufeinander abgestimmt werden. Ein gewisses Maß an Asymmetrie der Luftspaltkräfte kann über die Statik des Läufers und der Tragarme für die Statoren abgefangen werden. Die beiden Maschinenwirkseiten können im Fluss verkettet sein, müssen es jedoch nicht. Dadurch ist eine Bauform als jochlose Maschine oder mit Joch auch in Form einer Transversalflussmaschine möglich. Der Fluss durch die Läuferpole kann radial oder axial erfolgen, er kann mit oder ohne Durchtritt durch den Läufer erfolgen, solange er zum Kraftausgleich im Sinne der Kräfte auf den Läufer in radialer Richtung weitgehend symmetrisch erfolgt. Die Symmetrie kann mittels der Geometrie erreicht werden, oder durch aktive Regelung der Umrichter, was eine außen und innen unabhängige Wicklungsverschaltung benötigt, im anderen Falle nicht.

### 3. Beschreibung

Diese und weitere Merkmale und Vorteile der vorliegenden Erfindung werden anhand der nachfolgenden Beschreibung verschiedener erfindungsgemäßer Anordnungen unter Bezugnahme auf die beiliegende Zeichnung deutlich. Darin ist:
Figur 1 eine schematische Darstellung der Betriebsbereiche und dessen Ansteuerung einer (geschalteten) Reluktanzmaschine für den motorischen Betrieb nach dem Stand der Technik
Figur 2 eine schematische Darstellung eines maschinenseitigen Dreiphasenumrichters zum Betrieb einer Maschine im Dreiphasenpulsbetrieb
Figur 3 eine schematische Darstellung eines maschinenseitigen Dreiphasenumrichters zum Betrieb einer Maschine mit sinusförmigen Drehfeld
Figur 4 eine schematische Darstellung einer erfindungsgemäßen Anordnung eines Antriebs gemäß einer prinzipiellen Funktionsausführung als geschaltete Reluktanzmaschine mit zwei äußeren Statoren, einem Ringläufer und zwei inneren Statoren, hier ohne Wicklung dargestellt
Figur 5 eine schematische Darstellung einer erfindungsgemäßen Anordnung eines Antriebs gemäß einer prinzipiellen Funktionsausführung als Synchron-Reluktanzmaschine mit einem äußeren Stator, einem Ringläufer und einem inneren Stator, hier teilweise mit zwei verschiedenen Wicklungen dargestellt
Figur 6 eine schematische Darstellung einer Anordnung gemäß einer denkbaren Ausführungsform einer äußeren Viertelsegment-Statorstruktur der vorliegenden Erfindung.
Figur 7 eine schematische Darstellung einer Anordnung gemäß einer denkbaren Ausführungsform einer inneren Viertelsegment-Statorstruktur der vorliegenden Erfindung.
Figur 8 eine schematische Darstellung einer Anordnung gemäß einer denkbaren Ausführungsform einer Läuferstruktur der vorliegenden Erfindung, bestehend aus Läufertragstruktur und hier dargestellt zweier Viertel-Blechpakete
Figur 9 eine schematische Dar- stellung der Statorblechsegmente in drei verschiedenen Ausführungen
Figur 10 eine schematische Darstellung einer Ausführung eines Läufertragringes mit Segmentaufnahmen und Wärmeausdehnungsfugen für die Segmentbereiche und innere Kühlschaufeln
Figur 11 eine schematische Darstellung einer weiteren Ausführung eines Läufertragringes mit Segmentaufnahmen und Wärmeausdehnungsfugen für die Segmentbereiche, ohne Kühlschaufeln.
Figur 12 eine schematische Darstellung des Antriebs mit einem äußeren Statorblock von 120 Grad und auch 1/3 Polpaarabdeckung des Läufers. Zusätzlich ist die Kühlluftführung skizziert.
Figur 13 eine schematische Darstellung des Antriebs mit vier beabstandeten äußeren Statorblöcken, die jeweils ein halbes Polpaar Abstand zueinander aufweisen
Figur 14 eine schematische Darstellung des Antriebs aus Figur 12 in Schrägansicht als Beispiel eines Motors mit einem Statorsegment und einer Einscheibenausführung
Figur 15 eine schematische Darstellung des Antriebs in einer Ausführung mit zwei Statorsegmenten in einer Einscheibenausführung
Figur 16 eine schematische Darstellung des Antriebs in einer Ausführung mit zwei Statorblöcken in einer zweifachen Scheibenausführung
Figur 17 eine schematische Darstellung des Antriebs in einer Ausführung mit zwei Statorblöcken in einer dreifachen Scheibenausführung

Im Folgenden meint die Verwendung des Begriffes E-Maschine oder Antrieb sowohl eine motorisch, wie auch generatorisch arbeitende Elektromaschine. Der Begriff Umrichter meint sowohl einen Halbbrückenumrichter wie auch einen Vollbrückenumrichter, der sowohl netzseitig diodenbestückt und damit nicht rückspeisefähig sein kann, wie auch netzseitig rückspeisefähig ausgerüstet sein kann. Umrichter und Maschine bilden den Antrieb, bzw. das Antriebssystem.

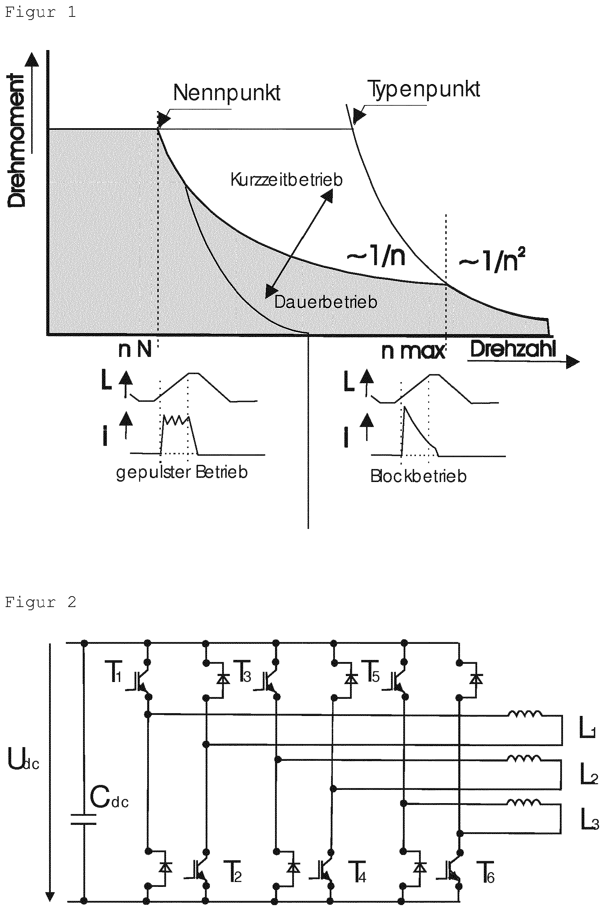

Figur 1 zeigt die typische Kennlinie einer Reluktanzmaschine, wie sie auch hier bei einer erfindungsgemäßen Ausführung bei ein- oder mehrphasigem geschalteten und sinusgeführten Umrichterbetrieb gültig ist. Unterhalb des Eckpunktes kann mit konstantem Drehmoment betrieben werden, oberhalb wird mit abfallendem Drehmoment bei steigender Drehzahl zu rechnen sein.

In bekannter Art und Weise ist in Figur 2 ein Halbbrückenumrichter für Reluktanzmaschinen dargestellt. In Figur 1 wird unter dem Diagramm eine Ansteuerung der Polbestromung bei ansteigender Induktivität bei motorischem Betrieb einer geschalteten Reluktanzmaschine schematisch dargestellt. Der Pol-Phasenstrom ist pollageabhängig in Bezug auf die Winkellage des Läuferpoles zum Statorpol und gemäß der Drehzahl-Drehmomentkennlinie der E-Maschine drehfrequenzabhängig auf zwei Arten anzusteuern: Impulsbetrieb für geringe Drehzahlen und Blockbetrieb für höhere Drehzahlen.

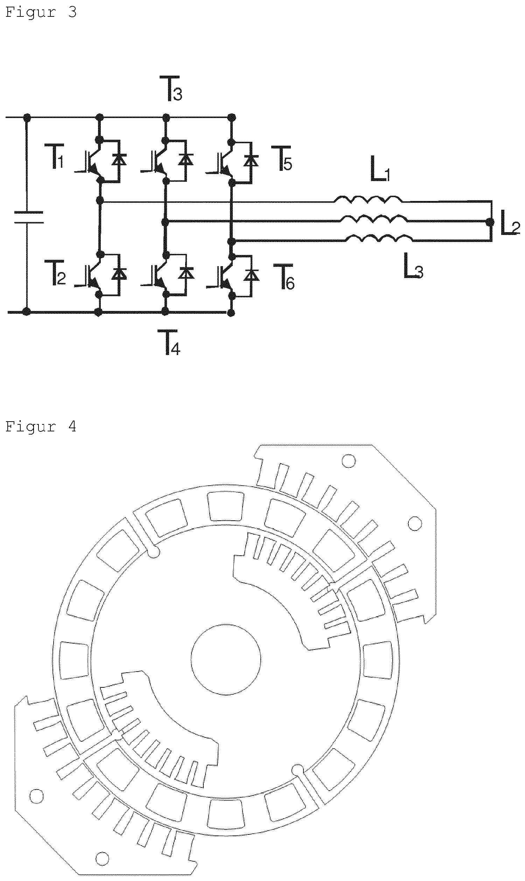

Für einen Betrieb mit einer klassisch sinusgeführten Synchronreluktanzmaschine wird ein Vollbrückenumrichter benötigt, wie in Figur 3 dargestellt. Dargestellt ist ein dreiphasiger Umrichter, wie er für einen Betrieb einer dreiphasigen Drehfeld-Synchronmaschine Verwendung finden kann. Die Reluktanzmaschinenpole werden auf mindestens einer Umrichterphase pro Pol, bis hin zu mehreren hart verschalteten Reluktanzpolen des Stators pro Umrichterphase verschaltet und die Pole bilden die mit L gekennzeichnete Induktivität bzw. Spulensysteme der Maschine.

Figur 4 zeigt in nicht limitierender Form eine Bauausführungen einer erfindungsgemäßen Anordnung eines Antriebs gemäß einer prinzipiellen Funktionsausführung mit zwei äußeren Statoren, einem Ringläufer und zwei inne- ren Statoren, einer geschalteten Reluktanzmaschine, hier ohne Wicklung dargestellt.

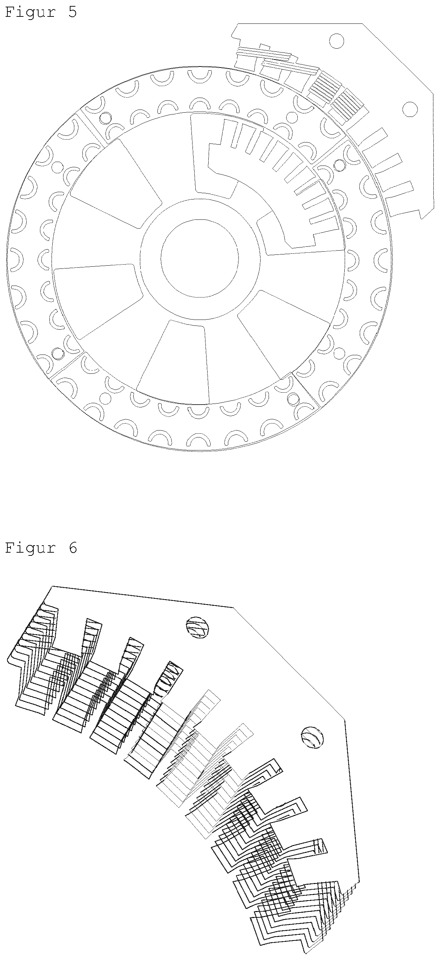

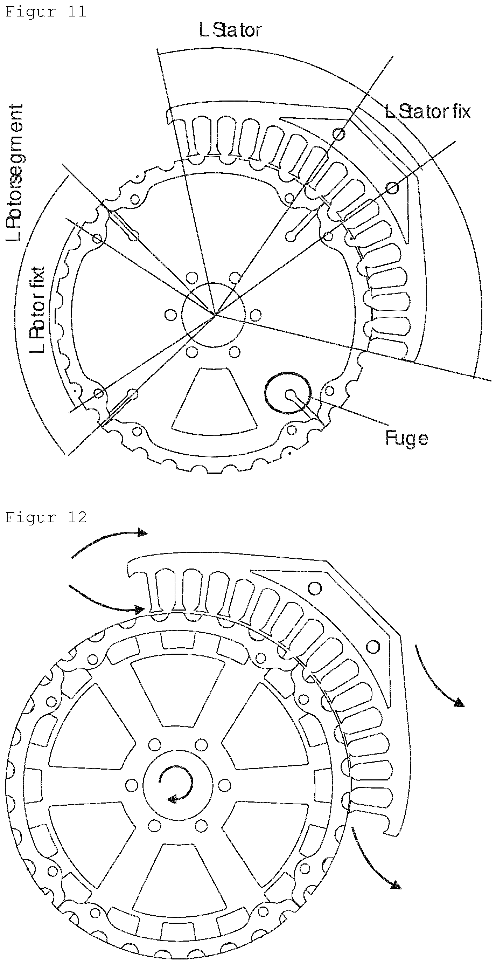

Figur 5 zeigt eine andere Bauausführung als Synchronreluktanzmaschine, mit einem äußeren und einem innerem Statorblock. Die Statorblöck sind hier als Viertelelement ausgeführt, sie können aber auch als Drittelsegment (Figur 11) oder in Form einer anderen Aufteilung zum Läuferring aufgeteilt sein.

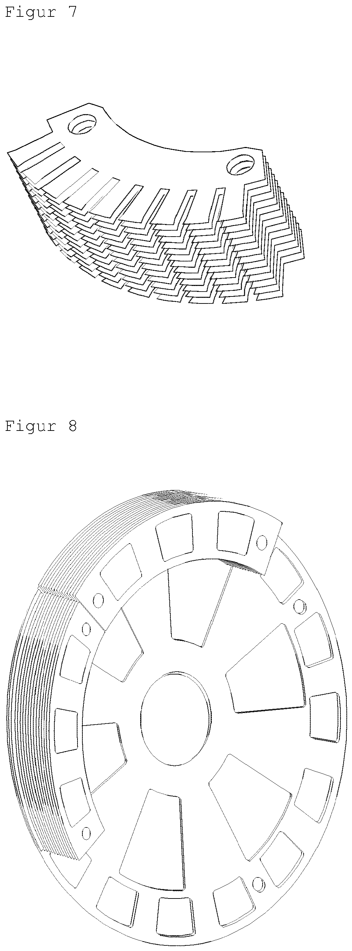

Der äußere Stator ist in einer beispielhaften Ausführung in Figur 6 dargestellt. Figur 7 zeigt einen inneren Statorblock. Figur 6 und 7 zeigen in nicht limitierender Form eine Bauausführungen des erfindungsgemäßen Maschinenstators in Segmentform, hier ca. 90°, um ein Viertelsegment zu bilden.

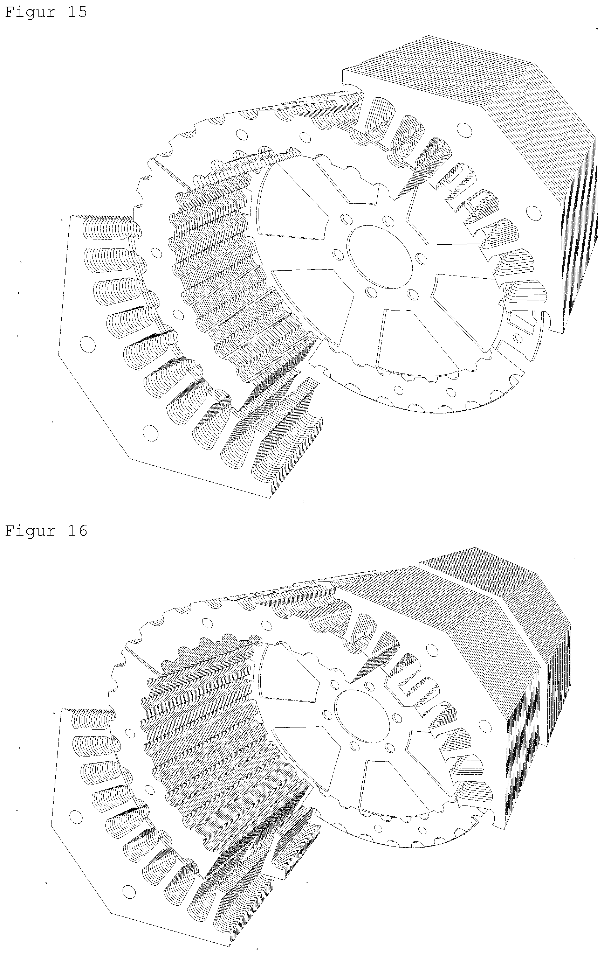

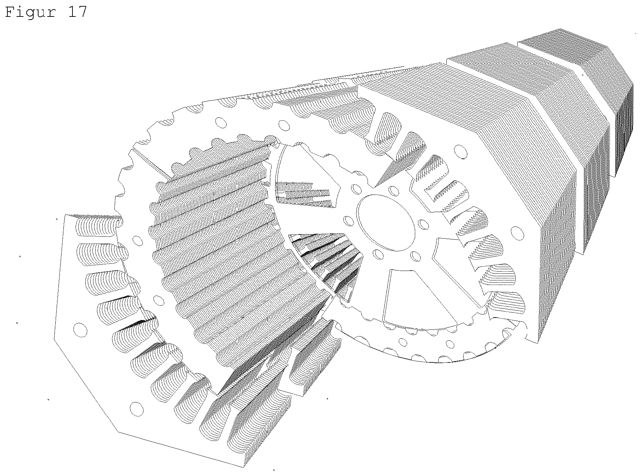

Vorteilhafterweise wird der Stator aus einem oder mehreren, baugleichen Statorsegmenten (z.B. 30°, 45°, 60°, 90°, 120° bis 180°) über den Umfang des Ringrotors verteilt angeordnet, wie es in Figur 12 bis 17 beispielhaft dargestellt wird. Der Stator kann je nach gewünschter Leistung mit 3, 6 oder 9 Statorzähnen (Figur 5), 12 oder auch 15 Statorzähnen (Figur 12), oder mehr gebaut werden, solange wie hier bei einer 3 phasigen Ausführung die Statorzahnzahl durch die Anzahl der Phasen geteilt werden kann. Eine 2, 4 oder 5-phasige Ausführung wäre ebenso denkbar. Ebenso mag es bauartspezifisch sinnvoll sein, eine 270° Maschine aus einem Statorsegment zu bauen.

Eine vorteilhafte Bauform sieht vor, sowohl einen äußeren, wie auch einen inneren Stator zu verwenden, wie es in Figur 4 bis 5 dargestellt ist. Dies führt zu einem weitgehend radialkraftfreien Aufbau, insbesondere wenn der innere Stator über mehr Zähne verfügt, als der äußere.

Der mindestens eine Statorsegmentblock kann aus Einzelzahnspulen oder aus verflochtenen bzw. verteilten Spulensystemen bestehen, wie es in Figur 4 angedeutet ist.

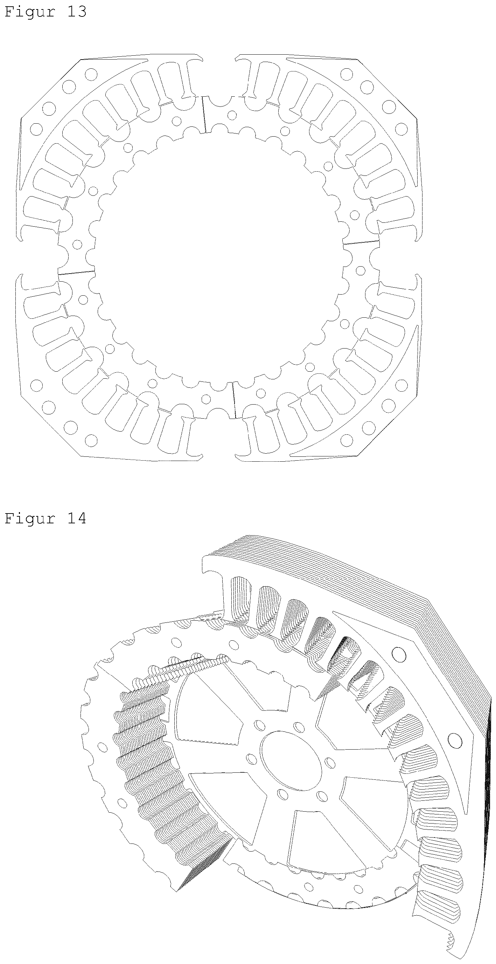

Erfindungsgemäß für den Antrieb, insbesondere für einen Baukasten zur Leistungsskalierung baugleicher Antriebe, kann der Antrieb aus mehreren, bauglei- chen Statorsegmenten ausgeführt werden, die über den Umfang des ringförmigen Läufers verteilt werden, wie es in Figur 13 und 15 bis 17 dargestellt ist. Die Statorsegmentblöcke lassen sich jeweils modular aufaddieren und ergeben in Summe der verwendeten Statorsegmente die nötige Luftspalttangentialkraft, die zusammen mit dem Wirkdurchmesser am Ringläufer und dessen Drehzahl die Antriebsleistung bildet. Die Statorsegmente enthalten in ihrer modularen Bauweise eine geeignete Leistungsaufteilung, die passend zu einem oder mehrerer Umrichtermodule ist.

Dadurch lässt sich die Leistung ohne Änderungen der Bauausführung einzelner Baugruppen durch summieren skalieren und es kann ein Baukasten für verschiedene Leistungsklassen aufgebaut werden. Der Baukasten ist dann gültig für einen Läuferringdurchmesser, wobei die Nutweiten und Windungszahlen der Statorzähne durchaus auf einen weiteren Durchmesser übertragen werden können, wobei dann die Polabstände des Läufers ganzzahlig auf die Umfangslänge übertragbar sein müssen. Im Gegensatz zu nicht segmentierten Statormaschinen ist hier nicht ein ganzzahliges Polpaar gemeint, sondern aufgrund der Besonderheit der Reluktanzmaschine ist hier nur der einfache Polabstand des Läufers heranzuziehen. Dieser führt dann im Bereich zwischen zwei Statorblöcken dazu, dass als Lücke zwischen zwei Statoren der 1,5-fache oder 3 -fache Statorzahnabstand (oder einfacher Polabstand des Läufers) oder ganzzahliges Vielfaches dessen eingestellt werden kann, sollte es sich wie hier um eine 3-phasige Maschine handeln. Dies ist in Figur 13 für vier Segmente mit jeweils 9 Zähnen gezeigt. Die Maschine verfügt über 28 Pole bzw. 14 Polpaare. Jeder Stator mit 9 Zähnen überstreicht 6 Pole, der siebte Pol wird nicht durch einen äußeren Stator überdeckt sondern bleibt hier frei. Es ist demnach eine Maschine mit 42 Nuten, bei der nur 4x9 ausgeführt sind. Die Statorblöcke lassen jeweils ein Pol frei. Der Raum kann zur Kühlluftführung in den Luftspalt verwendet werden.

Die Summierung der Statorsegmente und Umrichtermodule in ihrer modularen Bauweise führt zur gewünschten Gesamtleistung der Maschine. Auch diese Addition von Umrichterblöcken stellt eine einfache Form der Baukastenab- stufung innerhalb einer erfindungsgemäßen Baugrößenreihe dar.

Die Statorblöcke können symmetrisch am Läufer verteilt werden, oder asymmetrisch angeordnet werden, wodurch eine indifferente Lagerbelastung vermieden oder eigens erzeugt werden kann. Der elektrische Winkel zwischen den Statorblöcken kann dazu benutzt werden, um den Läufer in seiner Ausrichtung zu den Statorpolen mechanisch zu verspannen, hierdurch können z.B. Pendelmomente beeinflusst werden.

Figur 8 zeigt eine Ausführung des erfindungsgemäßen Maschinenläufers in Ringform. Der Läuferring ist geblecht ausgeführt und enthält weder ausgeprägte Magnetpole noch stromführende Bauteile, weiterhin ist er erfindungsgemäß ebenfalls segmentiert und wird in eine Trägerstruktur eingebunden, die die Lastführung zur Hauptwelle der Maschine darstellt.

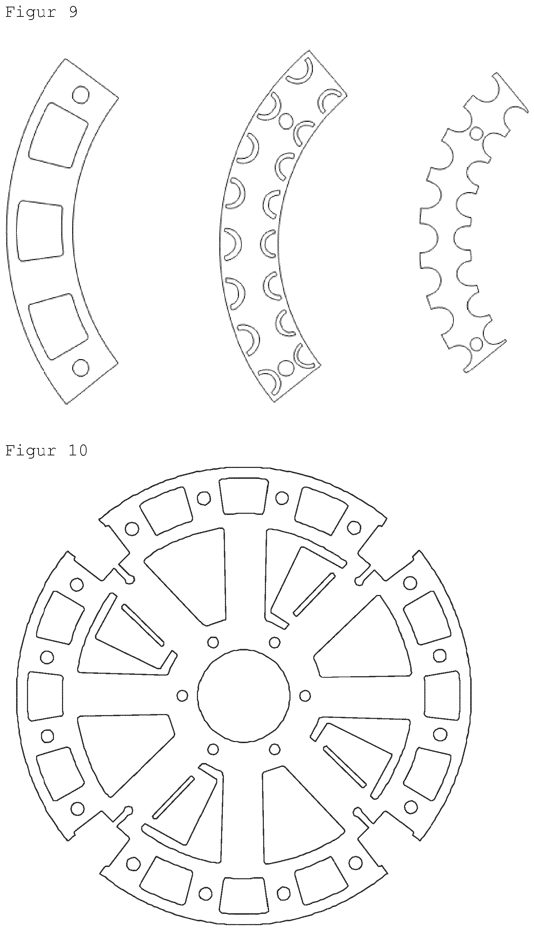

In der Läufertragstruktur sind mehrere axiale Durchbrüche, insbesondere ausgebildet als Kanalabschnitte angeordnet, durch die im Betrieb ein Luftstrom durchströmt. Dadurch, dass axial verlaufende Durchbrüche vorgesehen sind, wird der axiale Luftstrom verbessert bzw. erst ermöglicht. In den Durchbrüchen können zudem Elemente wie Lüfterschaufeln eingebunden sein, wie in Figur 10 dargestellt ist.

Die Trägerstruktur ist geeigneter Weise zur Welle oder zu den Läuferblechpaketen elektrisch und / oder thermisch isoliert ausgeführt, um einen Stromfluss und eine schädliche Wärmeabfuhr in die Tragstruktur zu vermeiden. Weiterhin verfügt die Tragstruktur erfindungsgemäß über auf dem Umfang verteilte Einschnitte (Figur 10 und 11, in Bild 11 als Fuge bezeichnet), die zu einer Wärmegangsentkopplung der Blechpakete bezogen auf die Umfangslänge der Blechpakete im doppelten Luftspalt gegenüber der Tragstruktur führt. Dies verringert im erheblichen Maße die Zunahme des Durchmessers des Ringgenerators bedingt durch die unsymmetrische Aufwärmung des passiv gekühlten Läuferringes gegenüber einer notwendigerweise zwangsgekühlten und ebenfalls segmentierten Statorstruktur und dessen Haltevorrichtung. Die Blechpaketsegmente können dann in Umfangsrichtung thermisch bedingt in den Spalt wachsen, ohne den Wirkdurchmesser zu erhöhen, da die Blechpakete gleichsam in die Einschnitte wachsen und dort eine für den Luftspaltdurchmesser schädliche Längendifferenz kompensieren können. Die Läufersegmentbleche sind dazu zusätzlich mit einem Ausdehnungsspalt beabstandet. Ebenso kann die Trägerplatte thermisch in ihre Einschnitte (Fuge, Bild 11) wachsen. Eine nicht endnahe Befestigung der Statorsegmente und Läuferbleche (L Stator > L Stator fix, L Rotorsegment > L Rotor fix), wie sie in Figur 11 und auch 14 ff dargestellt ist, verringert dieses rückwirkungsfreie thermische wachsen der Läuferbleche gegenüber dem Wirkdurchmesser des Gesamtläuferdurchmessers zusätzlich. Erst dadurch wird die radiale kleine Spaltausrichtung der Luftspaltfläche für den Motor auch bei hohen spezifischen Leistungsdichten erst ermöglicht. Ebenso verfügen die Statorsegmente über eine nicht endnahe Befestigung, die die gleiche Wirkung sicherstellt: Die thermische Dehnung wird in ihrer Wirkung auf den Luftspaltdurchmesser und damit den Luftspalt anteilig der Hebelarmverhältnisse Lx > L fix vermindert.

Die Läuferbleche müssen in der üblichen Form als flussführend und flussbehindernd einer D/Q-Polstruktur entsprechen. Hier kann mit einfachen Strukturen, wie einfachen oder mehrteiligen Ausschnitten mit und ohne Flussbrücken gearbeitet werden, wie für Synchronreluktanzmaschinen bekannt und wie in Figur 9 exemplarisch gezeigt wird.

Die axiale Aufteilung der Blechpakte in Bezug zur Tragstruktur (Figur 8) kann ebenfalls symmetrisch oder asymmetrisch bzw. doppelwirkend auf beiden Seiten der Tragstruktur erfolgen, so kann eine fliehkraftbedingte Biegung in der Tragstruktur vermindert werden, wenn diese beidseitig von der Tragstruktur mit halbem Hebelarm und auch beidseitig symmetrisch erfolgt. Figur 8 zeigt eine asymmetrische, da einseitige Aufteilung.

Mit einem modularen Elektromaschinen- und Umrichterkonzept könnte die Maschine bei geringwertigem Modulausfall weiter betrieben werden, wenn es aufgrund der Modulgröße nicht zu einem Ungleichgewicht im Kraftfluss führt, was eine reine Frage der Modulgrößenabstaffelung ist. Die Stillstandszeiten aufgrund eines heutigen Hauptkomponentenausfalls würden erfindungsgemäß weitgehend vermieden werden.

Die Umrichter müssen erfindungsgemäß mittels einem Bussystems oder eine externen Synchronisierungsschnittstelle derart miteinander verbunden sein, dass sie eine abgestimmte Phasenbestromung der Reluktanzpole darstellen können und ein gleichmäßiger Drehmomentverlauf in Addition aller verschalteter Pole erzeugt wird. Hierbei ist bekanntermaßen bei Reluktanzmaschinen auf eine geeignete Stromüberdeckung und/oder Stromführung während der Pulsphase zum Ausgleich der ebenfalls winkelabhängigen Induktivitätsaufbaus für die Drehmomenterzeugung der einzelnen Pole zu achten. Für Synchronreluktanzmaschinen im Drehstrombetrieb gilt analoges.

Die Phasenlage der Reluktanzläuferpole können mittels Sensoren oder sensorlos ermittelt werden. Hierzu können geeignet, zeitweise nicht zur Leistungserbringung verwendeten Reluktanzpole verwendet werden, indem sie als Sensor betrieben werden könnten. Ein Beobachtermodel wäre ebenso denkbar.

Die Umrichter können maschinenseitig 1 oder mehr Phasen enthalten, weiterhin netzseitig bevorzugt 1 oder 3-phasig sein. Dargestellt ist hier immer nur der maschinenseitige Umrichter bis zur DC-Schiene.

Weiterhin kann erfindungsgemäß eine Verformungskompensation des doppelten Luftspaltes erfolgen, indem die Umrichter den Luftspalt im Betrieb nachregeln und entweder stromauslastungsneutral, kraftneutral oder aber lageneutral regeln. Hierzu und zur typischen Drehmomentregelung einer Reluktanzmaschine sind die Einzelumrichter mittels eines Kommunikationsprotokolls miteinander verschaltet, so dass sie ihre Ansteuerung der Spulen und Pole untereinander synchronisieren können.

Zu nennen wäre weiterhin die Möglichkeit zur aktiven Stromregelung der Polbestromung, um eine Geräusch- oder Drehmomentanregung zu minimieren. Dadurch kann z.B. ein alternativ, mechanisch bewusst eingebrachtes Verkippen der Pole reduziert werden, oder eine typische Brotlaibtopologie der Poloberflächen, welche beide in erheblichem Um- fang analytisch und empirisch ermittelt werden müssen und die Entwicklungszeiten erhöhen. Gemeinsam ist diesem Ansatz, dass technische Optimierungen soweit möglich aus dem maschinenbaulichen oder elektromaschinenbaulichen Bereich in den elektronischen und regelungstechnischen Bereich verlagert werden, so dass sie in erheblich kürzeren Entwicklungszeiten mittels Softwareadaption im Umrichter optimiert werden können und auch zukünftig die Antriebe über Softwareupdates optimierungsfähig bleiben.

In einer weiteren Ausführung kann die Funktionalität der Einzelumrichteransteuerung ebenso dazu Verwendung finden, nicht nur die Drehmomentsynchronistation und die Luftspaltlage zu regeln, sondern auch die Bewegungsmöglichkeiten in torsionaler Richtung zur Regelung und/oder zur Dämpfung des Maschinebetriebs verwendet werden. Hierbei können alle Elemente des Zweimassenschwingers bestehend aus Rotationskörper (Läufer) und statischer Masse (Stator) verstanden werden, die nun ebenso ideal gedämpft werden könnten.

Die Struktur der Maschine als Direktantrieb und Einbaumotor in die Arbeitsmaschine ermöglicht es, dass die beiden Massen des Systems, welche ein schwingungsfähiges System bilden könnten, direkt durch den Luftspalt getrennt sind und nicht wie sonst üblich durch eine Drehfeder, wie zum Beispiel eine lange Antriebswelle oder ein Getriebe. Es ergibt sich hier bei geeigneter Bauform ein einzelner Zweimassenschwinger mit zentralem Luftspalt zur Bedämpfung der Bewegung der Tragstruktur der Maschine an der die Statorblöcke befestigt sind und dem Rotor der Elektromaschine mit dem drehenden Teile der Applikationsmaschine: Die Magnetspaltkräfte liegen bedingt durch diese Tragstruktur zwischen den beiden Schwingmassen und können über den Umrichter direkt als Aktuator verwendet werden und dämpfend benutzt werden. Dies ist ein weiterer Vorteil der integrierten Einbaumotoren und der Einzelpol- oder Polgruppenansteuerung durch einen modularen Umrichter, der aufgrund seiner kleineren Leistung höher getaktet werden kann. Grundsätzlich wird hier eine Bedämpfung des Systems bauartbedingt erheblich vereinfacht. Die Verschaltung kann wiederum über eine übergeordnete Regelungseinheit erfol- gen, oder über eine Master-Slave-Verschaltung der Umrichtermodule.

Der Luftspalt ist in einer vorteilhaften Ausführung weiterhin parallel zur Wirkrichtung der Arbeitsmaschinenlasten bezogen auf deren Wirkrichtung und Lagerverformung gestellt. Eine Achs-Biegung und naturgemäß identische Biegung der Stator-Tragstruktur in axialer Wirkrichtung verschiebt den Läufer im Luftspalt in planparalleler Richtung und ist dann nicht in Wirkrichtung des Luftspaltes. Diese Bauform wird für große Luftspaltdurchmesser erfindungsgemäß erst durch die Entkoppelung des Wärmegangs in seiner radialen Auswirkung ermöglicht und ermöglicht dadurch einen kleineren Luftspalt ohne die Tolerierung der Fertigungstoleranzen engere gestalten zu müssen. Weiterhin kann dann diese Struktur nicht wie üblich steif und schwer ausgeführt werden, sondern leicht und verformbar, da die Wirkrichtung der Verformung quer zur Luftspaltebene liegt.

Die Kühlung wird durch den eigenen Läufer erfüllt. Der Läufer an sich ist selbstkühlend, da er in Bezug zur Läuferfläche und der Statorfläche im Flächenverhältnis niedriger ausgenutzt ist. Die Zwangsströmung, die der Läufer in und um die Statoren bewirkt, ermöglicht bei geschickter Luftführung (Figur 12) eine vollkommen autarke Kühlung der E-Maschinenkomponenten, so dass nur die Umrichter eine Zwangskühlung benötigen würden. Die Statorsegmente können dazu neben der klassischen Rückseitenkühlung hier auch eine seitliche Kühlflächenausgestaltung erhalten. Diese wird durch den Luftzug des Läufers direkt erreicht und vergrößert die Kühlfläche in erheblichem Umfang. Die reine Rückseitenkühlung heutiger Radialflussmaschinen ist aufgrund des Wärmetransportes aus dem Luftspalt- und Wicklungsbereich bis hin zur Blechpaketrückseite weniger optimal als im Seitenbereich und im Luftspalt. Innerhalb eines radial umschlossenen Luftspaltes ist der Luftaustausch zudem erheblich reduziert. Gleichzeitig verfügt die stark verwirbelte Spaltströmung jedoch über einen extrem hohen Wärmeübergang, der nicht genutzt wird, da die Luft nicht aus dem umlaufenden Luftspalt gefördert werden kann. Hier erfolgt erfindungsgemäß ein erheblich schnellerer Luft- austausch aus dem Luftspalt heraus und hinein bedingt durch die seitlich vorhandenen Statorsegmentspalte (Figur 12 und auch Figur 13), die Läufersegmentspalte (Figur 8 und Figur 14 ff), dessen Luftführung und die Elemente der axialen Durchlüftung (Figur 10).

### Integrationskonzepte

Die aufgrund der partiellen und doppelwirkenden Anordnung der Statormodule einfachere mechanische Auslegung der Tragstruktur kann weiterhin applikationsspezifisch angepasst und gefertigt werden, dann kann sie bei einer Serienapplikation auch vereinfacht in die Antriebsstruktur integriert werden, da hier nun nur die mechanischen Gesichtspunkte interagieren müssen, die elektrotechnische Auslegung der Statorblöcke liegt als segmentierter Modulsatz vor. Hierdurch kann eine stark vereinfachte und damit kostengünstige Applikation im Bereich des Sondermaschinebaus erfolgen, da die Individualisierung der Maschine im einfachen Stahlbau erfolgen kann. In einer geeigneten Ausgestaltung wird die Tragstruktur des Läufers in die Tragstruktur der Sonderapplikation integriert, da erfindungsgemäß die Einzelbaugruppen der Zahnspulen und der Umrichter modular ausgeführt sind und in hohem Maße flexibel als Baukasten verwendet werden können. Die Integration führt zu einer erheblichen Kosteneinsparung im Antriebstrang, dieser mag für eine Rohrmühle, einen Mahlteller, einen Radnabenantrieb, eine Dreh-Kipptisch oder eine anderweitig verwendete motorische oder generatorische Rotationsmaschine sein.

Hierbei sollte konsequent auf den Kraftfluss der Applikation geachtet werden, kostenintensive Materialen werden durch eine Doppelverwendung minimiert. Das Hauptlager kann weiterhin klassisch als Fest-Loslagerung oder Momentenlagerung ausgebildet sein, die Hauptwelle könnte allerdings drehmomentfrei gehalten werden, wenn z.B. eine Rohrmühle mit äußerem Antrieb aufgebaut wird.

Die Kühlung könnte innerhalb eines Gehäuses u.U. weitgehend passiv aufgebaut werden, da der Läufer eine Kühlung für die Statorsegmente bewirkt, die durch eine geeignete Zu- und Abluftführung und Luftführung außen um die Statorsegmente herum noch unterstützt werden kann und auch weitere Maschinenkomponenten kühlen kann.

### Prüfkonzept und Betrieb

In einer weiteren Ausgestaltung der Erfindung ist es vorteilhaft, dass die Umrichter unabhängig voneinander, aber dennoch sychronisierbar motorisch und generatorisch betrieben werden können. Dadurch wird es erfindungsgemäß ermöglicht eine Maschine in einer internen Leistungsrückführung zu betreiben, was bei einer Systemprüfung, einen Modultest oder einer Sonderanwendung von Vorteil ist, da hier keine externe Prüfmaschine benötigt wird. Die erfindungsgemäß interne Leistungsverzweigung führt dazu, dass die Maschine unter Drehmoment, bzw. unter Leistung gefahren werden kann, ohne über eine extern dementsprechend dimensionierte Antriebsmaschine und Drehmomentabstützung auf einem Plattenfeld zu benötigen. Dies führt gerade bei Sondermaschinen im hohen Leistungsbereich, die mehrere Meter Durchmesser haben können, zu erheblichen Einsparungen für die Systemprüfung. Da die interne Tragstruktur der Maschine den Leistungsfluss Prinzip bedingt und auslegungsbedingt ertragen muss, reicht eine Fixierung als Standsicherung.

### Baugrößenbildung, Baukasten

Die erfindungsgemäße Elektromaschine enthält eine spezifische Pol- bzw. Polpaardimensionierung, diese ist abhängig von der Drehzahlauslegung bzw. dem bevorzugten Drehzahlbereich bei dem die Maschine betrieben werden soll. Üblicherweise wird die elektrodynamische Auslegung bei diesem Betriebspunkt als Nennbetriebspunkt im Sinne der Drehzahl, des Drehmomentes und der Leistung bezeichnet. Diese Größen sind im klassischen Fall nicht unabhängig voneinander, sie stehen wie in Figur 1 dargestellt in einem Zusammenhang. Eine Drehzahlverringerung kann nicht bei konstanter Leistung ohne eine Erhöhung des Momentes erfolgen, auch wird sich die Polwechselfrequenz der Maschine mit der Drehzahl verringern, damit müsste sich die pro Poldurchgang induzierte Tangentialkraft ebenfalls erhöhen, was notwendigerweise eine Erhöhung von Strom oder Spannung benötigt. So ergibt sich auslegungs- bedingt eine Poldimensionierung, die in Bezug auf Polwinkel, Polbreite und -tiefe, Windungszahl, Induktivität, Spannung und Strombelag eine optimale Betriebsführung für einen Frequenzbereich bewirkt. Abhängig von der Nenndrehzahl dieser Antriebsauslegung des hier vorgeschlagenen Antriebs ergibt sich bei einer spezifischen Auslegungsgrundfrequenz eine Läuferumfangsgeschwindigkeit, die vom Tragarmdurchmesser und der Polweite abhängig ist. Bei drehzahlabhängiger Wahl des Wirkdurchmessers der Läuferstruktur, gleichsam auch der Hebelarmlänge, kann eine immer identische Umfangsgeschwindigkeit des Antriebs konstruiert werden, die zu einer immer identischen Polwechselfrequenz führt. Wird hierbei die Polweite konstant gehalten, kann die Leistung als eine reine Funktion der Luftspaltfläche betrachtet werden. Da die Statoren segmentiert sind, ist es möglich über ein Aufaddieren der Pole, der Statoregmente oder der Motorscheiben eine Leistungsanpassung aufzubauen (Figur 12 bis 17), die durchmesserneutral ist, sie wirkt nur auf die summierte Statorsegmentlänge, nicht auf die Umfangslänge des Rotors, wie bei Ringmaschinen heute naturgemäß zwangsverknüpft. Bei einer Ausführung als segmentiertes Einzelzahnspulensystem kann ein kompletter Leistungsbereich nur durch Addieren der Polzahl und der Anpassung des Läufer-Luftspaltdurchmessers aus nur einer Polauslegung generiert werden. Bei kleinen Maschinen wird der Statorblock varrierend aus Blöcken mit mehreren Wicklungen bestehen und die Blöcke werden summiert (Figur 12, 13, ff). Bei größeren Leistungen werden u.U. Einzelzahnspulen auf einem Träger sinnvoller werden.

Mit einer Stator- und Polgeometrie mit optimierter Auslegung ist es dann erfindungsgemäß möglich einen Baukasten aufzubauen, der einen sehr großen Leistungs- und Drehzahlbereich abdecken kann, was eine bisher unbekannte Möglichkeit zur Standardisierung und damit Serienfertigung im Elektromaschinenbereich, bei Freiheit der Läuferdurchmesserwahl ermöglicht. Elektromaschinen für Antriebe können innerhalb eines breiten Leistungsbereiches mit einer Polauslegung auf ein komplettes Baukastensystem reduziert werden. Erst die Gruppierung dieser Module bewirkt die Individualisierung zum speziellen Endprodukt. Die Polwicklungen können dadurch im Rahmen einer industriellen Serienfertigung für einen Spannungsbereich hergestellt werden und werden in einem zweiten Schritt durch das Aufaddieren bzw. Aufstapeln zu einer Anzahl von Polen oder Polsegmenten auf die jeweilige Leistung skaliert, die die gewünschte E-Maschine für das jeweilige System benötigt. Hierbei ist es sinnvoll z.B. unter Verwendung der Ähnlichkeitstheorie mit steigender Leistung des elektrischen Antriebes mehrere Spannungsniveaus gemäß der heute üblichen Staffelung vorzusehen. Die Statorhöhe bzw. Spulenlänge kann hier ebenfalls einer oder mehrerer geeigneten Auslegung entsprechen, dann ist es dadurch erfindungsgemäß möglich mit einer elektrodynamischen Polauslegung einer Elektromaschine einen sehr großen Leistungs- und Drehzahlbereich abzudecken.

Bei heutigen Maschinen mit Zahnspulenauslegung kann ein gewisser Anteil an Gleichteilen erwirkt werden, bei der hier vorgestellten Lösung besteht der komplette Stator aus Gleichteilen oder Gleichteilsegmenten.

Die segmentierte Bauform der ringförmigen Reluktanzmaschine ermöglicht demnach eine erfindungsgemäße Modularisierung. Die zusätzliche einmalige Auslegung einer Polgeometrie ermöglicht zudem weiterhin eine Baukastenmethodik und einen Modulbau in Bezug auf einen normierten Pol und einen normierten Umrichter mit einer Skalierbarkeit auf mehrere Leistungsgrößen und Drehmomentklassen, aber auch einen nach heutigen Maßstäben vollständigen Serienbau der Einzelmodule.

Radantriebe, Lüfterräder, Lüfterwalzen, Drehtische, Rohrmühlen, Rohröfen, Windturbinen, Strömungsmaschinen können innerhalb eines breiten Leistungsbereiches innerhalb eines Spannungsniveaus mit einer Polauslegung auf ein komplettes Baukastensystem reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Ringmaschine für den Umrichterbetrieb in Ausführung einer Reluktanzmaschine umfassend einen Stator und einen Ringläufer, wobei der Stator aus mindestens einem Statorblock besteht und wobei die Ringmaschine als geschaltete Reluktanzmaschine oder Synchronreluktanzmaschine betrieben wird, bei der der Stator radial gegenüber dem Ringläufer angeordnet und durch einen Luftspalt getrennt ist und der Stator den Ringläufer umfänglich nur partiell umgibt, wobei die Wicklungen in Zahnspulenausführung oder verteilter Ausführung alleinig auf dem Stator ausgeführt sind,
wobei der Ringläufer in scheibenförmiger oder trommeiförmiger Ausführung aus einer Tragstruktur und auf der Tragstruktur angebrachten geblechten Ringsegmenten zur Flussführung besteht und wobei die Ringsegmente in Umfangslänge ebenfalls in Segmente aufgeteilt sind, sich dadurch Ausnehmungen oder Fugen zwischen den Ringsegmenten bilden und die thermische Dehnung des Rotors vom Luftspaltdurchmesser entkoppeln,
wobei ein Wicklungssystem des mindestens einen Statorblocks aus mindestens zwei Phasen besteht, die mit mindestens einem maschinenseitigen Umrichterkreis pro Phase bestromt werden können, wobei diese Umrichterkreise über eine Synchronisationsmöglichkeit zur Phasenbestromung verfügen und
wobei eine thermische Dehnung des Rotors zum Luftspaltdurchmesser innerhalb der Tragstruktur des geblechten Ringläufers durch in der Umfangsrichtung angeordnete schlitzförmige Ausnehmungen oder Fugen entkoppelt ist.

2. Elektrische Ringmaschine nach Anspruch 1, **dadurch gekennzeichnet, dass** der Stator mindestens ein Statorsegment umfasst.

3. Elektrische Ringmaschine nach Anspruch 1, **dadurch gekennzeichnet, dass** eine thermische Isolierung zwischen der Tragstruktur und den geblechten Ringsegmenten angeordnet ist, die gleichzeitig als elektrische Isolierung wirkt und eine thermische Ausdehnung der geblechten Ringsegmenten in Umfangsrichtung durch die Ausnehmung zwischen den Segmenten aufgefangen wird.

4. Elektrische Ringmaschine nach einem der vorherigen Ansprüche, **dadurch gekennzeichnet, dass** eine zusätzliche Unterstützung der Flussbildung durch Permanentmagnete im Stator oder Ringläufer erfolgt.

5. Elektrische Ringmaschine nach einem der Ansprüche 2 bis 4, **dadurch gekennzeichnet, dass** diese eingerichtet ist, dass eine Anzahl von maschinenseitigen Umrichterkreisen derart auf eine Anzahl von unabhängigen Phasen bei einem oder mehreren Statorsegmenten der Ringmaschine verschaltbar ist, dass bei Synchronisation der Phasenbestromung ein Betrieb trotz Einzelausfall einer Phase oder eines maschinenseitigen Umrichterkreises möglich ist.

6. Elektrische Ringmaschine nach einem der Ansprüche 2 bis 5, **dadurch gekennzeichnet, dass** diese eingerichtet ist, dass eine Anzahl von maschinenseitigen Umrichterkreisen derart auf eine Anzahl von unabhängigen Phasen bei einem oder mehreren Statorsegmenten der Ringmaschine verschaltbar ist, dass bei Synchronisation der Phasenbestromung eine geeignete Stromführung zur Summierung der Einzelphasenleistungen zu einer gleichförmigen Kraftentwicklung der Ringmaschine als Gesamtmaschine kommt.

7. Elektrische Ringmaschine nach einem der Ansprüche 2 bis 6, **dadurch gekennzeichnet, dass** diese eingerichtet ist, dass eine Anzahl von maschinenseitigen Umrichterkreisen derart auf eine Anzahl von unabhängigen Phasen bei einem oder mehreren Statorsegmenten der Ringmaschine verschaltbar ist, dass bei Synchronisation der Phasenbestromung eine geeignete Stromführung zum Kraftausgleich der doppelseitigen oder gegenüberliegenden Luftspaltstatorseiten kommt, der lageneutral, positionsneutral oder kraftneutral sein kann, und / oder eine dynamischen Regelung der torsionalen Eigenschaften der Ringmaschine bewirkt.

8. Elektrische Ringmaschine nach einem der Ansprüche 2 bis 7, **dadurch gekennzeichnet, dass** diese eingerichtet ist, dass eine Anzahl von maschinenseitigen Umrichterkreisen derart auf eine Anzahl von unabhängigen Phasen bei einem oder mehreren Statorsegmenten der Ringmaschine verschaltbar ist, dass bei Synchronisation der Phasenbestromung ein Betrieb mit innerer Leistungsverzweigung möglich ist, bei dem ein Teil der Umrichterkreise motorisch und ein weiterer Teil der Umrichterkreise generatorisch arbeiten, so dass es über einen entsprechenden Zwischenkreis zu einem Austausch der elektrischen Leistung kommt und die Verlustleistung über den netzseitigen Umrichter zugeführt werden kann.

## Claims

1. An electric ring machine for converter operation in the form of a reluctance machine comprising a stator and an annular rotor, wherein the stator consists of at least one stator block and wherein the ring machine is operated as a switched reluctance machine or synchronous reluctance machine, in which the stator is arranged radially opposite the annular rotor and is separated by an air gap and the stator only surrounds the annular rotor partially,
wherein the windings are available in tooth coil version or distributed version exclusively on the stator, wherein the annular rotor in disc-shaped or barrel-shaped version consists of a support structure and laminated ring segments attached to the support structure for flux guiding and wherein the ring segments are also divided into segments in the circumferential length, thus forming recesses or joints between the ring segments and decoupling the thermal expansion of the rotor from the air gap diameter,
wherein a winding system of the at least one stator block consists of at least two phases, which can be energised with at least one machine-side converter circuit per phase, wherein these converter circuits have a synchronisation option for phase current supply and
wherein a thermal expansion of the rotor is decoupled from the air gap diameter within the support structure of the laminated annular rotor by slot-shaped recesses or joints arranged in the circumferential direction.

2. The electric ring machine according to Claim 1, **characterized in that** the stator comprises at least one stator segment.

3. The electric ring machine according to Claim 1, **characterized in that** a thermal insulation is arranged between the support structure and the laminated ring segments, which at the same time acts as electrical insulation and a thermal expansion of the laminated ring segments is absorbed in the circumferential direction by the recess between the segments.

4. The electric ring machine according to one of the preceding claims, **characterized in that** there is an additional support for flux formation by permanent magnets in the stator or annular rotor.

5. The electric ring machine according to one of Claims 2 to 4, **characterized in that** it is configured such that a number of machine-side converter circuits can be connected to a number of independent phases in one or a plurality of stator segments of the ring machine in such a way that when phase current supply is synchronised, operation is possible despite the individual failure of one phase or of a machine-side converter circuit.

6. The electric ring machine according to one of Claims 2 to 5, **characterized in that** it is configured such that a number of machine-side converter circuits can be connected to a number of independent phases in one or a plurality of stator segments of the ring machine in such a way that when phase current supply is synchronised, a suitable current conduction for summation of the individual phase outputs results in a uniform force development of the ring machine as a whole.

7. The electric ring machine according to one of Claims 2 to 6, **characterized in that** it is configured such that a number of machine-side converter circuits can be connected to a number of independent phases in one or a plurality of stator segments of the ring machine in such a way that when phase current supply is synchronised, a suitable current conduction results in the force compensation of the double-sided or opposite air gap stator sides, which can be location-neutral, position-neutral or force-neutral, and/or causes a dynamic control of the torsional properties of the ring machine.

8. The electric ring machine according to one of Claims 2 to 7, **characterized in that** it is configured such that a number of machine-side converter circuits can be connected to a number of independent phases in one or a plurality of stator segments of the ring machine in such a way that when phase current supply is synchronised, operation with an internal power split is possible, in which some of the converter circuits operate as motors and some of the converter circuits operate as generators, such that the electric power is exchanged via a corresponding intermediate circuit and the power loss can be supplied via the mains-side converter.

## Revendications

1. Machine électrique annulaire pour un fonctionnement en onduleur dans un mode de réalisation d'une machine à réluctance comprenant un stator et un rotor annulaire,
dans laquelle le stator est constitué d'au moins un bloc de stator et la machine annulaire fonctionne comme une machine à réluctance commutée ou une machine à réluctance synchrone, dans laquelle le stator est agencé de façon radiale par rapport au rotor annulaire et séparé par un entrefer et le stator entoure seulement partiellement le rotor annulaire,
dans laquelle les enroulements sont réalisés uniquement sur le stator selon une réalisation en bobine dentée ou selon une réalisation répartie,
dans laquelle le rotor annulaire est constitué, dans un mode de réalisation en forme de disque ou en forme de tambour, d'une structure porteuse et de segments annulaires feuilletés placés sur la structure porteuse en vue de conduire le flux et dans laquelle les segments annulaires sont également divisés en segments dans le sens de la longueur circonférentielle et des évidements ou des rainures se forment ainsi entre les segments annulaires et découplent la dilatation thermique du rotor du diamètre de l'entrefer,
dans laquelle un système d'enroulement de l'au moins un bloc de stator est constitué d'au moins deux phases qui peuvent être alimentées par au moins un circuit convertisseur côté machine par phase, ces circuits convertisseurs disposant alors d'une possibilité de synchronisation par rapport à l'alimentation des phases
et dans laquelle une dilatation thermique du rotor est découplée du diamètre d'entrefer à l'intérieur de la structure porteuse du rotor annulaire feuilleté par des rainures ou des évidements en forme de fentes agencés dans la direction circonférentielle.

2. Machine électrique annulaire selon la revendication 1, **caractérisée en ce que** le stator comprend au moins un segment de stator.

3. Machine électrique annulaire selon la revendication 1, **caractérisée en ce qu'**une isolation thermique est agencée entre la structure porteuse et les segments annulaires feuilletés, laquelle isolation thermique agit en même temps comme isolation électrique et une dilatation thermique des segments annulaires feuilletés dans la direction circonférentielle est absorbée par l'évidement entre les segments.

4. Machine électrique annulaire selon l'une des revendications précédentes, **caractérisée en ce qu'**un soutien supplémentaire de la formation de flux est produit par des aimants permanents dans le stator ou le rotor annulaire.

5. Machine électrique annulaire selon l'une des revendications 2 à 4, **caractérisée en ce qu'**elle est conçue pour qu'un certain nombre de circuits convertisseurs côté machine puissent être branchés de telle sorte sur un certain nombre de phases indépendantes au niveau d'un ou plusieurs segments de stator de la machine annulaire que, lors de la synchronisation de l'alimentation des phases, un fonctionnement est possible malgré une panne isolée d'une phase ou d'un circuit convertisseur côté machine.

6. Machine électrique annulaire selon l'une des revendications 2 à 5, **caractérisée en ce qu'**elle est conçue pour qu'un certain nombre de circuits convertisseurs côté machine puissent être branchés de telle sorte sur un certain nombre de phases indépendantes au niveau d'un ou plusieurs segments de stator de la machine annulaire que, lors de la synchronisation de l'alimentation des phases, un flux de courant approprié entraîne un cumul des puissances de phases individuelles en un développement de force uniforme de la machine annulaire en tant que machine globale.

7. Machine électrique annulaire selon l'une des revendications 2 à 6, **caractérisée en ce qu'**elle est conçue pour qu'un certain nombre de circuits convertisseurs côté machine puissent être branchés de telle sorte sur un certain nombre de phases indépendantes au niveau d'un ou plusieurs segments de stator de la machine annulaire que, lors de la synchronisation de l'alimentation des phases, un flux de courant approprié entraîne un équilibrage de forces des côtés de stator d'entrefer bilatéraux ou opposés qui peut être neutre en orientation, neutre en position ou neutre en force et/ou provoquer une régulation dynamique des propriétés torsionnelles de la machine annulaire.

8. Machine électrique annulaire selon l'une des revendications 2 à 7, **caractérisée en ce qu'**elle est conçue pour qu'un certain nombre de circuits convertisseurs côté machine puissent être branchés de telle sorte sur un certain nombre de phases indépendantes au niveau d'un ou plusieurs segments de stator de la machine annulaire que, lors de la synchronisation de l'alimentation des phases, il est possible d'avoir un fonctionnement avec ramification interne de puissances tel qu'une partie des circuits convertisseurs travaille de façon motrice et une autre partie des circuits convertisseurs de façon génératrice de telle sorte qu'il se produit via un circuit intermédiaire correspondant un échange de la puissance électrique et que la puissance dissipée peut être envoyée via l'onduleur côté réseau.
